Europäisches Patentamt

European Patent Office

Office européen des brevets

(11) Publication number: **0 039 151**
**B1**

(12) EUROPEAN PATENT SPECIFICATION

(45) Date of publication of patent specification: **12.09.84**

(21) Application number: **81301513.8**

(22) Date of filing: **07.04.81**

(51) Int. Cl.³: **E 03 B 3/28,** C 02 F 1/18,
C 02 F 1/00

(54) Water producing apparatus.

(30) Priority: **29.04.80 JP 57617/80**

(43) Date of publication of application:
**04.11.81 Bulletin 81/44**

(45) Publication of the grant of the patent:
**12.09.84 Bulletin 84/37**

(84) Designated Contracting States:
**CH DE FR GB IT LI NL**

(56) References cited:
**CH-A- 183 694**
**DE-A-2 810 269**
**DE-C- 731 471**
**FR-A-1 149 657**

(73) Proprietor: **MITSUBISHI DENKI KABUSHIKI
KAISHA
2-3, Marunouchi 2-chome Chiyoda-ku
Tokyo 100 (JP)**

(72) Inventor: **Yamamoto, Toshie
No. 65, Andohjicho 5-chome
Itami-shi Hyogo-ken (JP)**
Inventor: **Takeyama, Tetsu
1-8-103, Morikitacho 5-chome
Higashinada-ku, hyogo-len (JP)**
Inventor: **Ikeda, Akira
11-35-623, Ohtanicho
Hyogo-ken (JP)**

(74) Representative: **Warden, John Christopher et al
R.G.C. Jenkins & Co. 12-15, Fetter Lane
London EC4A 1PL (GB)**

Courier Press, Leamington Spa, England.

EP 0 039 151 B1

## Description

The present invention relates to apparatus for producing liquid water from moisture in air using an adsorbent.

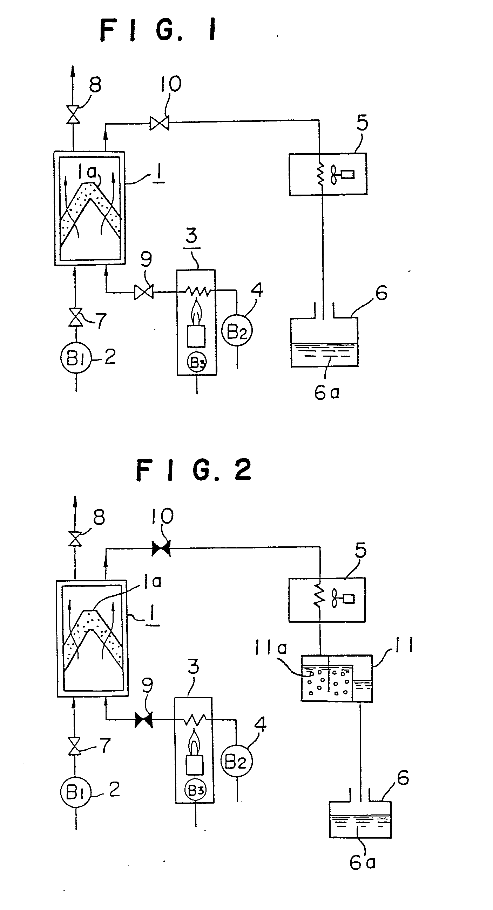

The apparatus shown in Figure 1 of the accompanying drawings has been proposed as such water producing apparatus. In Figure 1, the reference numeral (1) designates a container for holding a layer (1a) of a solid adsorbent such as silica gel and molecular sieve; (2) designates an air feeding device; (3) designates a heating device for desorption; (4) designates a blower for feeding air for desorption; (5) designates a condenser; (6) designates a water storage tank; (6a) designates liquid water; (7), (8) designates respectively directional control valves for adsorption and (9), (10) designates respectively directional control valves for desorption.

The operation will be illustrated. When the directional control valves (7), (8) for adsorption are opened, air conditioning moisture is fed into the container (1) by the air feeding device (2) and is passed through the layer (1a) of the solid adsorbent to adsorb the moisture on the adsorbent in the layer. After adsorbing the moisture as desired on the adsorbent, the directional control valves (7), (8) for adsorption are closed and the directional control valves (9), (10) for desorption are opened and hot air is fed by the blower for feeding desorption air (4) and the heater (3), to evaporate water from the adsorbent and the air containing a large amount of desorbed steam is fed into the condenser (5) wherein the steam is cooled by the environment and the condensed water is stored in the storage tank (6).

The condensed water obtained from such conventional apparatus is substantially the same as distilled water which has no taste and does not contain any mineral component. Therefore, the condensed water is not suitable as drinking water since it is liable to cause disorders of the digestive organs such as diarrhoea if it is used for a long time.

Various improvements of the water producing apparatus for improving the efficiency of water production have been proposed by the Inventors as disclosed in European Patent Application Nos. 0014895, 0019143, 0019805 and 0025342. These apparatuses also have the same trouble.

DE—C—731 471 describes water producing apparatus comprising a column holding an adsorbent for adsorbing moisture from the air; a device for feeding moisture-laden air into the column, a heating device for heating the adsorbent to desorb the water extracted from the air, a condenser for steam desorbed from the column and a device for incorporating in the water obtained a readily soluble flavour-improving substance such as tea, coffee, or salt. This device is positioned between the column and the condenser, where the water is in vapour form, so that although such soluble substances can be incorporated such apparatus could not be used to incorporate less soluble minerals.

It is an object of the present invention to overcome the above-mentioned disadvantages and to provide a water producing apparatus equipped with a compact mineral adding device.

The present invention provides water producing apparatus which comprises a column for holding an adsorbent for adsorbing moisture from the air; a device for feeding moisture-laden air into said column; a heating device for heating said adsorbent to desorb the adsorbed water during a desired period; a condenser for condensing steam desorbed by said heating device; and a mineral adding device for dissolving a mineral component in the water obtained from the column, characterized in that the mineral adding device is positioned immediately downstream of the condenser and contains pulverised marble as a mineral source, the pulverised marble being immersed in, and directly contacting, hot water issuing from the condenser. The water producing apparatus of the present invention thus dissolves the mineral component in hot condensed water and the mineral adding device can be compact and thus considerably reduce the size of the apparatus, making it easily portable.

Preferred embodiments of the invention will now be described with reference to the accompanying drawings wherein:

Figure 1 is a schematic view of the conventional water producing apparatus;

Figure 2 is a schematic view of one embodiment of the water producing apparatus of the present invention;

Figure 3 is a graph of characteristic curves of dissolution of the minerals from pulverised marble; and

Figure 4 is a schematic view of another embodiment of the present invention.

Referring to the drawings, one embodiment of the present invention will be illustrated.

Figure 2 shows one embodiment of the water producing apparatus of the present invention. In Figure 2, the same references designate identical or corresponding parts shown in Figure 1. The reference numeral (11) designates a mineral adding device and (11a) designates marble with which the device is packed.

The apparatus having this structure has the same fundamental water producing effect as that of Figure 1. The hot water obtained by condensing it in the condenser is fed immediately into the mineral adding apparatus whereby the mineral is dissolved into water to obtain a mineral water and the mineral water is stored in the water storage tank (6). The mineral component dissolves gradually from the mineral mass immersed in the water.

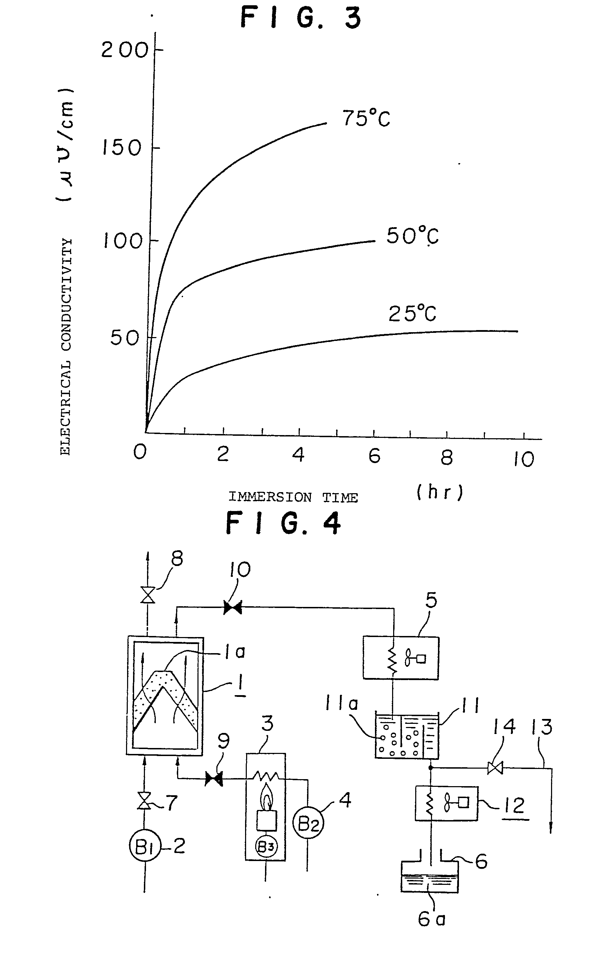

As shown in Figure 3, the velocity of dissolution of the mineral component from the marble into the hot water is remarkably high.

When it is shown by the electroconductivity as the index of the solubility of the mineral component, it takes only about 0.5 hour at 75°C to reach 100 $\mu$ mho/cm whereas it takes about 5 hours at 50°C. Therefore, if the hot water obtained by the condensation in the condenser (about 80°C) is immediately fed into the mineral adding device, the mineral component is dissolved into water in a short time with high efficiency. The residence time for the addition of the mineral component can be short and the capacity of the mineral adding device can be decreased to about 1/10 of the capacity of a similar device for dissolving the mineral at 50°C. Thus, a compact economical water producing apparatus can be obtained.

Figure 4 shows another embodiment, in which the water passed through the mineral adding device (11) is immediately cooled to the ambient temperature, a cooling device (12) is connected for forcible cooling whereby the water in the water storage tank (6) can be at the ambient temperature.

When a passage (13) for discharging water passed through the mineral adding device is connected and a valve (14) is opened or closed, the hot water from the passage (13) and the cool water from the water storage tank (6) can be selectively fed as desired.

As the mineral for the mineral adding device, the marble having high velocity for dissolution at high temperature is used.

The velocity for dissolution can be further improved by a forcible convection or a stirring in the mineral adding device.

These examples are provided for purposes of illustration only and are not intended to be limiting the present invention and various modifications can be applied in the scope of the present invention. For example, the fundamental structure of the water producing apparatus shown in Figure 4 is simple, and the apparatus may not be satisfactory in view of heat efficiency. In order to improve the heat efficiency and the time efficiency for producing water, various modifications can be applied, for example, the structures of the water producing apparatuses disclosed in European Patent Application Nos. 0014895, 0019143, 0019805 and 0025342 can be combined with the present invention connecting the mineral adding device between the condenser and the water storage tank. These modifications are usually preferable.

In accordance with the present invention, the hot water obtained by the condensation is immediately fed into the mineral adding device whereby the mineral component can be dissolved into the condensed water in a remarkably short time and the compact water producing apparatus equipped with the mineral adding device for dissolving the mineral component at high velocity is obtained to produce water suitable for drinking.

## Claims

1. Water producing apparatus which comprises a column (1) for holding an adsorbent (1a) for adsorbing moisture from the air; a device (2) for feeding moisture-laden air into said column; a heating device (3) for heating said adsorbent to desorb the adsorbed water during a desired period; a condenser (5) for condensing steam desorbed by said heating device; and a mineral adding device (11) for dissolving a mineral component in the water obtained from the column, characterized in that the mineral adding device (11) is positioned immediately downstream of the condenser (5) and contains pulverised marble as a mineral source (11a), the pulverised marble being immersed in, and directly contacting, hot water issuing from the condenser.

2. Water producing apparatus according to Claim 1 characterized in that said adsorbent (1a) is a silica gel or molecular sieve.

3. Water producing apparatus according to Claim 1 or Claim 2 in that a cooling device (12) is connected between said mineral adding device (11) and a water storage tank (6) to cool forcibly the water containing the mineral component.

4. Water producing apparatus according to any preceding claim wherein water is forced through said mineral adding device (11) to improve the rate of dissolution.

## Revendications

1. Appareil pour la production d'eau qui comprend une colonne (1) renfermant un adsorbant (1a) pour adsorber l'humidité de l'air; un dispositif (2) pour introduire de l'air chargé en humidité dans ladite colonne; un dispositif de chauffage (3) pour chauffer ledit adsorbant afin de désorber l'eau adsorbée pendant une durée désirée; un condenseur (5) pour condenser la vapeur désorbée par ledit dispositif de chauffage; et un dispositif d'addition de substance minérale (11) pour dissoudre un composant minéral dans l'eau obtenue à partir de la colonne, caractérisé en ce que le dispositif d'addition de substance minérale (11) est placé immédiatement en aval du condenseur (5) et contient du marbre pulvérisé à titre de source de substance minérale (11a), le marbre pulvérisé étant immergé, à contact direct, dans l'eau chaude provenant du condenseur.

2. Appareil pour la production d'eau selon la revendication 1, caractérisé en ce que ledit adsorbant (1a) est un gel de silice ou un tamis moléculaire.

3. Appareil pour la production d'eau selon la revendication 1 ou la revendication 2, caractérisé en ce qu'un dispositif de refroidissement (12) est branché entre ledit dispositif d'addition de substance minérale (11) et un réservoir de stockage d'eau (6) pour refroidir de manière forcée l'eau contenant le composant minéral.

4. Appareil pour la production d'eau selon l'une quelconque des revendications précédentes, dans lequel l'eau est forcée au travers dudit dispositif d'addition de substance minérale (11) pour améliorer le taux de dissolution.

**Patentansprüche**

1. Wassererzeugungsapparat, welcher eine Säule (1) enthaltend ein Adsorptionsmittel (1a) zum Adsorbieren von Feuchtigkeit aus der Luft, eine Vorrichtung (2) zum Speisen feuchtigkeitsbeladener Luft in die Säule, eine Heizvorrichtung (3) zum Heizen des Adsorptionsmittels zum Desorbieren des adsorbierten Wassers während eines gewünschten Zeitraumes, einen Verflüssiger (5) zum Kondensieren von durch die Heizvorrichtung desorbiertem Dampf und eine Mineralzusetzvorrichtung (11) dem Auflösen einer mineralischen Komponente in dem aus der Säule erhaltenen Wasser aufweist, dadurch gekennzeichnet, daß die Mineralzusetzvorrichtung (11) unmittelbar stromabwärts von dem Verflüssiger (5) angeordnet ist und pulverisierten Marmor als mineralische Quelle (11a) enthält, wobei der pulverisierte Marmor in das aus dem Verflüssiger austretende heiße Wasser eintaucht und mit diesem in direktem Kontakt ist.

2. Wassererzeugungsapparat nach Anspruch 1, dadurch gekennzeichnet, daß das Adsorptionsmittel (1a) ein Silikagel oder ein molekularer Siebdurchsatz ist.

3. Wassererzeugungsapparat nach Anspruch 1 oder 2, dadurch gekennzeichnet, daß eine Kühlvorrichtung (12) zwischen die Mineralzusetzvorrichtung (11) und einen Wasserspeichertank (6) eingeschaltet ist, um das die mineralische Komponente enthaltende Wasser zwangszukühlen.

4. Wassererzeugungsapparat nach einem der vorangehenden Ansprüche, dadurch gekennzeichnet, daß Wasser durch die Mineralzusetzvorrichtung (11) gedrückt wird, um die Auflösungsrate zu verbessern.

# FIG. 1

# FIG. 2

# F I G. 3

# F I G. 4

2